# EUROPÄISCHE PATENTSCHRIFT

(11) **EP 3 626 896 B1**
(45) Veröffentlichungstag und Bekanntmachung des Hinweises auf die Patenterteilung: **27.11.2024**
(21) Anmeldenummer: 19197674.5
(22) Anmeldetag: 17.09.2019
(51) Int. Cl.: E03F 1/00, B61D 35/00, F16L 37/47

(54) **ABSAUGVORRICHTUNG ZUM ABFÜHREN EINES MISCHFLUIDS, INSBESONDERE FÄKALIEN ENTHALTEND, AUS EINEM SAMMELBEHÄLTER**
SUCTION DEVICE FOR DISCHARGING A MIXING FLUID, IN PARTICULAR CONTAINING FAECES, FROM A COLLECTING CONTAINER
DISPOSITIF D'ASPIRATION PERMETTANT D'ÉVACUER UN FLUIDE MÉLANGÉ, EN PARTICULIER CONTENANT DES MATIÈRES FÉCALES, D'UN RÉSERVOIR COLLECTEUR

(30) Priorität: 18.09.2018 DE 202018105346 U
(43) Veröffentlichungstag der Anmeldung: 25.03.2020
(60) Teilanmeldung: 24194746.4
(73) Patentinhaber: Vogelsang GmbH & Co. KG, 49632 Essen (DE)
(72) Erfinder: LUCKS, Hermann, 49757 Werlte (DE); HEITMANN, Michael, 49632 Essen ( Oldenburg ) (DE)
(74) Vertreter: Eisenführ Speiser

(56) Entgegenhaltungen:
- WO-A1-2015/095964
- DE-A1- 102012 103 061
- DE-U1- 202004 019 308
- US-A- 2 770 474

## Beschreibung

Die Erfindung betrifft eine Absaugvorrichtung zum Abführen eines Mischfluids, insbesondere Fäkalien enthaltend, aus einem Sammelbehälter, insbesondere aus einem Fäkalientank eines Schienenfahrzeugs, mit einem Gehäuse mit einem Mischfluid-Einlass und einem Mischfluid-Auslass, einem Strömungskanal, der sich in dem Gehäuse zwischen dem Einlass und dem Auslass erstreckt, eine an dem Gehäuse montierten Sperrklinke, die dazu eingerichtet ist, mit einer korrespondierenden Ausnehmung an dem Sammelbehälter zusammenzuwirken und zwischen einer verriegelten Position und einer entriegelten Position hin- und herschwenkbar ist, einem Absperrorgan, welches zwischen einer Freigabestellung und einer Sperrstellung hin- und herbewegbar ist, und einem an dem Gehäuse montierten Handhabungsmittel zum Betätigen des Absperrorgans.

Fahrzeuge, insbesondere Schienenfahrzeuge oder auch andere Last- und Personenfahrzeuge wie beispielsweise Wohnwagen, verfügen häufig zum Sammeln von Fäkalien über Sammelbehälter. Diese Sammelbehälter müssen in regelmäßigen Abständen geleert werden. Zu diesem Zweck weisen Sammelbehälter häufig einen Auslass auf, wie beispielsweise einen Stutzen an einer Außenseite eines Fahrzeugs, an dem eine Schlauchkupplung eines Absaugschlauchs anschließbar ist, sodass die in dem Tank befindlichen Fäkalien mittels Unterdruck absaugbar sind.

Herkömmliche Absaugvorrichtungen, bzw. Absaugkupplungen, weisen häufig ein Absperrorgan zum Verschließen des Strömungskanals und einen Verriegelungsmechanismus zum Verriegeln der Absaugvorrichtung mit dem Stutzen des Sammelbehälters auf. Wird der Strömungskanal durch das Absperrorgan vor dem Entriegeln der Absaugvorrichtung nicht verschlossen, kommt es zum Austritt von Fäkalien. Ein solches Austreten von Mischfluid (beispielsweise Fäkalien) ist nicht nur aufgrund des schlechten Geruchs unerwünscht, sondern führt auch zu Verschmutzungen der Absaugvorrichtung und des Sammelbehälters und ist ebenfalls unter Gesichtspunkten des Gesundheits- und Wasserschutzes als bedenklich einzustufen.

Ferner ist es bei der Verwendung solcher Absaugvorrichtungen zumeist erforderlich, in einem ersten Schritt die Absaugvorrichtung mit dem Stutzen mittels eines Verriegelungsmechanismus zu verriegeln, bevor in einem zweiten Schritt das Absperrorgan zum Freigeben des Strömungskanals betätigt werden kann und umgekehrt. In der US 4 103 712 A und der US 2002/0171057 A1 werden solche Vorrichtungen offenbart. Aus DE 20 2004 019308 U1 ist ferner eine Vorrichtung zum Absaugen von Schmutzwasser und Fäkalien aus Bahnwaggons bekannt. US 2 770 474 A betrifft eine Schnellwechselkupplung mit einem integrierten Ventil. DE 10 2012 103 061 A1 betrifft eine Kupplung zum Anschluss fluidführender Leitungen, wobei die Kupplung ein erstes Kupplungsteil und ein zweites Kupplungsteil, sowie eine Dichtung zum Abdichten der beiden Kupplungsteile und eine Verriegelungsmechanik umfasst. Aus WO 2015/095964 A1 ist eine Kupplung mit einem integrierten Ventil bekannt.

Die bekannten Vorrichtungen ermöglichen erst die Freigabe des Absperrorgans nachdem die Kopplung erfolgt ist. Es ist somit ein weiterer separat zu verrichtender Handhabungsschritt erforderlich. Aus praktischer Sicht ist jedoch eine Kopplung des Verriegelungsmechanismus mit dem Absperrorgan wünschenswert.

Aufgabe der vorliegenden Erfindung ist es daher, eine bezüglich mindestens einem der genannten Nachteile gegenüber verbesserte Absaugvorrichtung anzugeben. Insbesondere ist es Aufgabe der Erfindung, eine Absaugvorrichtung mit vereinfachter Bedienung bei gleichbleibender Sicherheit gegen das Austreten von Mischfluid aus dem Sammelbehälter anzugeben.

Die vorliegende Erfindung löst die Aufgabe bei einer Absaugvorrichtung der eingangs genannten Art durch die Merkmale des Anspruchs 1. Das Absperrorgan ist somit durch das Handhabungsmittel von einer Freigabestellung, in welcher der Mischfluid-Einlass und der Mischfluid-Auslass durch den Strömungskanal in Fluidkommunikation stehen, in eine Sperrstellung, in welcher der Strömungskanal durch das Absperrorgan verschlossen wird, bringbar. Es wird somit eine Absaugvorrichtung angegeben, bei der das Absperrorgan in die Sperrstellung gebracht wird, sobald die Sperrklinke in die entriegelte Position bewegt.

Gemäß einer vorteilhaften Weiterbildung der Erfindung ist das Handhabungsmittel derart mit der Sperrklinke wirkverbunden, dass bei der Bewegung des Absperrorgans in die Freigabeposition die Sperrklinke in die verriegelte Position gebracht wird. Die Bedienung der Absaugvorrichtung wird somit durch das simultane Betätigen des Absperrorgans und der Sperrklinke zum Verriegeln der Absaugvorrichtung vereinfacht und die Einleitung der Absaugvorganges beschleunigt.

Es ist ebenso im Sinne der Erfindung, dass bei einer solchen Absaugvorrichtung, durch die Verriegelung der Sperrklinke simultan das Absperrorgans geöffnet und der Absaugvorgang eingeleitet wird. Ein zusätzlicher Bedienschritt entfällt somit auch hierbei, sodass die Bedienung der Absaugvorrichtung weiter vereinfacht wird.

Gemäß einer bevorzugten Ausführungsform der Erfindung umfasst die Absaugvorrichtung ferner einen entlang einer Längsachse bewegbaren Kopplungskörper, insbesondere einen Keil, welcher mit dem Handhabungsmittel wirkverbunden und dazu eingerichtet ist, die Sperrklinke zwischen der verriegelten Position und der entriegelten Position hin- und herzubewegen. Durch einen Kopplungskörper, welcher vorzugsweise als ein Keil ausgebildet ist, wird ein einfaches und funktionales Bauteil zum Koppeln der Sperrklinke mit dem Handhabungsmittel vorgeschlagen. Diese werden derart mechanisch koppelt, dass das Absperrorgan durch das Handhabungsmittel in die Sperrstellung gebracht wird, sobald die Sperrklinke in die entriegelte Position bewegt wird. Bevorzugt ist der Kopplungskörper ferner dazu eingerichtet, die Sperrklinke in die verriegelte Position zu bringen, sobald das Absperrorgan durch Betätigung mittels des Handhabungsmittels in die Freigabestellung gebracht wird.

Gemäß einer bevorzugten Ausführungsform ist die Ausnehmung des Sammelbehälters im Bereich eines mit dem Mischfluid-Einlass koppelbaren Anschlusses ausgebildet, und die Sperrklinke ist schwenkbar am Bereich des Mischfluid-Einlasses montiert und dazu eingerichtet, mit dem Anschluss des Sammelbehälters in Eingriff gebracht zu werden. Somit wird die Absaugvorrichtung bereits beim Erstkontakt zwischen Sammelbehälter und Absaugvorrichtung, welcher üblicherweise zwischen dem Anschluss des Sammelbehälter und dem Mischfluid-Einlass der Absaugvorrichtung stattfindet, verriegelt. Es können somit beispielsweise in Umfangsrichtung verlaufende Nuten an der Außenseite des ausgebildeten Anschlusses vorgesehen sein, in welche die Sperrklinke durch eine Schwenkbewegung eingreift. Die Prozesszeit wird somit reduziert, da der Erstkontakt zwischen Sammelbehälter und Absaugvorrichtung bereits eine Verriegelung durch die Sperrklinke ermöglicht.

Erfindungsgemäß ist das Absperrorgan drehbeweglich in dem Gehäuse angeordnet, und die Freigabestellung und die Sperrstellung des Absperrorgans entsprechen unterschiedlichen Drehstellungen des Absperrorgans. Vorzugsweise liegt die Drehachse des Absperrorgans parallel, besonders bevorzugt koaxial, zu einer Längsachse des Strömungskanals, in dem das Absperrorgan angeordnet ist.

Das Handhabungsmittel ist mit dem Absperrorgan mittels eines Zahnradgetriebes wirkverbunden, wobei das Zahnradgetriebe dazu eingerichtet ist, die Betätigungsbewegung des Handhabungsmittels in die Drehbewegung des Absperrorgans umzusetzen.

In bevorzugten Ausführungsformen umfasst das Absperrorgan einen Verengungskörper, welcher bewegbar in dem Gehäuse gelagert und dazu eingerichtet ist, einen Querschnitt des Strömungskanals abschnittsweise oder entlang seiner gesamten Längsachse zu verringern, und wobei das Handhabungsmittel dazu eingerichtet ist, das Absperrorgan durch Bewegen des Verengungskörpers zu betätigen. Durch einen Verengungskörper, welcher den Querschnitt des Strömungskanals verringert, ist konstruktiv in einfacher Weise das Absperren des Strömungskanals sichergestellt, um den Mischfluid-Einlass der Absaugvorrichtung von dem Anschluss des Sammelbehälters zu trennen. Ferner Dies erlaubt eine einfache sowie robuste mechanisch Betätigung durch das Handhabungsmittel, die manuell oder motorisch ausgeführt werden kann. Die erfindungsgemäße Vorrichtung ist verschleiß- und wartungsarm und ferner kosteneffizient. Der Absaugvorgang kann zunächst mit einem großen Strömungskanalquerschnitt begonnen werden, sodass ein hoher Volumenstrom erreicht wird.

Vorzugsweise weist das Handhabungsmittel einen Schieber auf, und der Kopplungskörper ist an dem Schieber angeordnet. Als Schieber wird das Handhabungsmittel zum Verriegeln bzw. Entriegeln des Absperrorgans entlang des Gehäuses hin- und herbewegt. Durch die Anordnung des Kopplungskörpers an dem Schieber, korrespondierend zu der Sperrklinke, führt dieser gleichermaßen eine Bewegung entlang der Längsachse aus und ist dadurch mit der Sperrklinke in Eingriff bringbar. Die Sperrklinke wird daraufhin zwischen der verriegelten Position und der entriegelten Position in Abhängigkeit der Position des Schiebers hin- und herbewegt.

Die Kombination eines linear beweglichen Schiebers mit einer drehbeweglichen Anordnung des Absperrorgans hat sich als besonders vorteilhaft herausgestellt. Die Linearbewegung des Schiebers wird dabei in eine Rotationsbewegung des Absperrorgans umgewandelt. Die lineare Bewegung des Handhabungsmittels ist benutzerintuitiv für das An- und Abkoppeln der Absaugvorrichtung, und zugleich ermöglicht das Ausführen einer Rotationsbewegung des Absperrorgans bzw. des Verengungskörpers eine kompakte Bauweise.

Gemäß einer weiteren bevorzugten Ausführungsform weist das Handhabungsmittel einen Kniehebel auf, und der Kopplungskörper ist mittels eines drehbar gelagerten Hebels mit dem Kniehebel gekoppelt. Der Kopplungskörper fungiert in diesem Ausführungsbeispiel als Schieber. Ein Kniehebel ist in einfacher Weise, intuitiv zu betätigenden und bietet ein hohes Maß an Sicherheit. Durch die Kopplung des Kopplungskörpers mittels eines drehbar gelagerten Hebels mit dem Kniehebel kann der Kopplungskörper durch Vollziehen einer Schwenkbewegung des Kniehebels linear, also entlang der Längsachse, auf die Sperrklinke zubewegt werden, um diese zwischen einer verriegelten Position und einer entriegelten Position hin- und herzubewegen.

Vorzugsweise ist an dem Gehäuse eine Nut ausgebildet, welche dazu eingerichtet ist, den Kopplungskörper zu führen. Somit wird eine Fehlfunktion des Kopplungskörpers durch Verdrehen oder Kippen, beispielsweise durch eine dynamische Belastung der Absaugvorrichtung infolge des Abpumpens, vermieden.

Vorzugsweise ist das Absperrorgan zusätzlich zu der Sperrstellung und der Freigabestellung in eine Schlürfstellung bewegbar, so dass das Absperrorgan dazu eingerichtet ist, den Strömungskanal in der Sperrstellung fluiddicht zu verschließen, in der Freigabestellung freizugeben, und in der Schlürfstellung lediglich verengt freizugeben, insbesondere derart, dass in der Schlürfstellung der Querschnitt des Strömungskanals geringer ist als in der Freigabestellung. Durch die Multifunktionalität des Absperrorgans entfällt somit die Notwendigkeit für ein zusätzliches Sperrventil, wodurch der Aufbau der Absaugvorrichtung wesentlich vereinfacht wird. Auch das Gewicht der erfindungsgemäßen Absaugvorrichtung wird so verringert. In alternativen Ausführungsformen wäre etwa durch ein Bewegen des Absperrorgans in die Sperrstellung ein Verschlusselement aktivierbar, welches dazu eingerichtet ist, den Strömungskanal zu verschließen. So ist es ebenfalls möglich, den Durchmesser des Strömungskanals zu variieren, vorzugsweise während eines Absaugvorgangs.

Durch das Bewegen des Absperrorgans in die Schlürfstellung, in welcher der Querschnitt des Strömungskanals geringer ist als in der Freigabestellung, wird das Fluid in dem Strömungskanal gegenüber der Geschwindigkeit in dem Auslass des Sammelbehälters beschleunigt, sodass eine turbulente Strömung entsteht. Die turbulente Strömung sorgt dafür, dass auch feste, bzw. hochviskose Bestandteile des Mischfluids mitgerissen und abgesaugt werden. Der Effekt beschränkt sich dabei nicht nur auf den Strömungskanal, sondern vielmehr auch wenigstens abschnittsweise auf den Auslass des Sammelbehälters, insbesondere einen angekoppelten Stutzen, sodass auch dieser vom Mischfluid bzw. Fäkalien befreit wird.

In einer weiteren bevorzugten Ausgestaltung entspricht die Schlürfstellung einer weiteren Drehstellung des Absperrorgans neben den erfindungsgemässen Drehstellungen der Sperrstellung und der Freigabestellung.

Vorzugsweise ist dabei die Schlürfstellung zwischen der Freigabestellung und der Sperrstellung angeordnet. Das hat zur Folge, dass jedes Mal, wenn die Absaugvorrichtung abgekoppelt werden soll, zwangsläufig das Absperrorgan die Schlürfstellung durchschreiten muss, wenn das Handhabungsmittel zum Entriegeln der Sperrklinken betätigt wird. Das wiederum stellt sicher, dass die Absaugvorrichtung an ihrem Einlassende stets fäkalienfrei ist, wenn die Absaugvorrichtung abgekoppelt wird.

Die Erfindung wird im Folgenden unter Bezugnahme auf die beigefügten Figuren und anhand eines bevorzugten Ausführungsbeispiels näher beschrieben. Hierbei zeigen:
- Figuren 1a, b: perspektivische Ansichten einer erfindungsgemäßen Absaugvorrichtung,
- Figuren 2 a-c: die erfindungsgemäße Absaugvorrichtung gemäß den Figuren 1a, b in einer Ausgangsstellung mit verschlossenem Strömungskanal,
- Figuren 3 a-c: die erfindungsgemäße Absaugvorrichtung gemäß den Figuren 1a, b in einer Nachsaugstellung mit teilverschlossenem Strömungskanal,
- Figuren 4 a-c: die erfindungsgemäße Absaugvorrichtung gemäß den Figuren 1a, b in einer Absaugstellung mit offenem Strömungskanal,
- Figur 5a: eine erste Seitenansicht eines alternativen Ausführungsbeispiels einer erfindungsgemäßen Absaugvorrichtung im entriegelten Zustand,
- Figur 5b: eine erste Seitenansicht des alternativen Ausführungsbeispiels der Absaugvorrichtung gemäß Figur 5a im verriegelten Zustand,
- Figur 6a: eine Seitenansicht des alternativen Ausführungsbeispiels der Absaugvorrichtung gemäß Figur 5a im entriegelten Zustand, und
- Figur 6b: eine zweite Seitenansicht des alternativen Ausführungsbeispiels der Absaugvorrichtung gemäß Figur 5a im verriegelten Zustand.

Die folgenden konkret beschriebenen Ausführungsbeispiele zeigen jeweils eine mechanisch manuell betätigbare Absaugvorrichtung. Es soll verstanden werden, dass insbesondere die manuelle Betätigung jeweils eine bevorzugte Ausführungsform darstellt, dass aber auch abweichend davon andere Betätigungsarten, beispielsweise elektromotorische, hydraulische und/oder pneumatische Betätigungsarten.

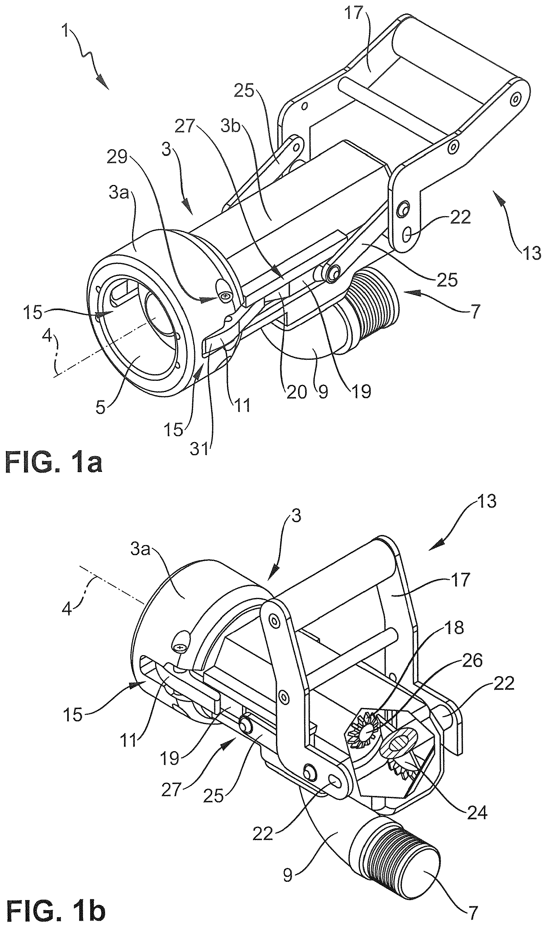

Gemäß Figur 1 weist eine erfindungsgemäße Absaugvorrichtung 1 zum Abführen eines Mischfluids, insbesondere Fäkalien enthaltend, aus einem Sammelbehälter, ein Gehäuse 3 mit einem Mischfluid-Einlass 5 und einem Mischfluid-Auslass 7 auf.

Das Gehäuse 3 weist eine Längsachse 4, einen zylindrischen Gehäuseabschnitt 3a, sowie einen Gehäuseabschnitt 3b mit einem polygonalen Querschnitt auf. Der Gehäuseabschnitt 3b weist somit eine Mehrzahl schräg zueinander angeordneter und im Wesentlichen ebenverlaufender Wandsegmente auf, welche sich entlang der Längsachse 4 erstrecken.

Der Mischfluid-Einlass 5 ist fluidleitend mit einem Anschluss eines Sammelbehälters (nicht dargestellt) koppelbar und der Mischfluid-Auslass 7 ist fluidleitend mit einer Saugleitung (nicht dargestellt) verbindbar. Zwischen dem Mischfluid-Einlass 5 und dem Mischfluid-Auslass 7 ist ein Strömungskanal 9 angeordnet.

An dem Gehäuse 3 ist ferner eine Sperrklinke 11 angeordnet. Die Sperrklinke 11 ist dazu eingerichtet, durch eine Durchgangsöffnung 15, welche an dem zylindrischen Gehäuseteil 3a, insbesondere im Bereich des Mischfluid-Einlasses 5, ausgebildet ist, zumindest partiell hindurchzugreifen. Die Sperrklinke 11 ist dabei derart durch die Durchgangsöffnung 15 bewegbar, dass sie mit einem Auslass eines Sammelbehälters in Eingriff gelangen kann und besonders bevorzugt mit einer korrespondierend ausgebildeten Ausnehmung in dem Sammelbehälter. Es können mehrere Sperrklinken 11 vorgesehen werden, beispielsweise 2, 3, 4, oder mehr Sperrklinken.

Die Absaugvorrichtung 1 umfasst ferner ein schwenkbar am Gehäuse angeordnetes Handhabungsmittel 13, welches vorliegend als Kniehebel 17 ausgebildet ist. Der Kniehebel 17 ist mittels einer Kniehebelwelle 22 schwenkbar am Gehäuse 3 angeordnet. Dabei ist die Kniehebelwelle 22 drehfest mit dem Kniehebel 17 verbunden, so dass ein Verschwenken des Kniehebels 17 eine Rotation der Kniehebelwelle 22 bewirkt.

An dem Kniehebel 17 ist an jeder Seite des Gehäuses 3 ein Hebel 25 drehbeweglich angeordnet. Der Hebel 25 ist drehbeweglich mit einem Kopplungskörper 19 verbunden. Der Kopplungskörper 19 weist einen Keilabschnitt 20 auf. Der Kopplungskörper 19 mit dem Keilabschnitt 20 ist ferner in einer Führung 27, welche sich im Wesentlichen parallel zur Längsachse 4 erstreckt, geführt. Ein Verschwenken des Kniehebels 17 hat demnach zur Folge, dass die Schwenkbewegung mittels der Hebel 25 in eine lineare Bewegung des Kopplungskörpers 19 transformiert wird. Mit anderen Worten lässt sich die axiale Position des Kopplungskörpers 19 durch die Schwenkposition des Kniehebels 17 einstellen. Der Keilabschnitt 20 des Kopplungskörpers 19 ist dazu eingerichtet, mit der Sperrklinke 11 in Kontakt zu treten, dergestalt, dass eine Bewegung des Kopplungskörpers 19 mit dem Keilabschnitt 20 in Richtung des Mischfluid-Einlasses 5 bewirkt, dass sich der Keilabschnitt 20 unter die Sperrklinke 11 schiebt.

Die Sperrklinke 11 ist um eine Sperrklinkenschwenkachse 29 drehbeweglich gelagert. Tritt der Keilabschnitt 20 des Kopplungskörpers 19 in Kontakt mit der Sperrklinke 11, so hebt sich diese im Kontaktbereich zwischen Sperrklinke 11 und Keilabschnitt 20 des Kopplungskörpers 19 durch Abgleiten an dem Keilabschnitt 20 ab. Aufgrund der Lagerung der Sperrklinke 11 um die Sperrklinkenschwenkachse 29 bewirkt dieses, dass sich ein Verriegelungsabschnitt 31 der Sperrklinke 11 durch die Durchgangsöffnung 15 nach Innen bewegt.

Auf diese Weise kann der Verriegelungsabschnitt 31 der Sperrklinke 11 mit einem Auslass eines Sammelbehälters (nicht gezeigt) in Eingriff gebracht werden und die Absaugvorrichtung 1 mithin mit selbigem reversibel gekoppelt werden.

Unter Bezugnahme auf Figur 1b wird nachfolgend die Funktion der Kniehebelwelle 22 erläutert. Ein Verschwenken des Kniehebel 17 bewirkt aufgrund der drehfesten Verbindung des Kniehebels 17 mit der Kniehebelwelle 22 eine Drehbewegung der Kniehebelwelle 22. Auf der Kniehebelwelle 22 ist ein Zahnkranzelement 24 angeordnet. Dieses steht in Eingriff mit einem Kegelrad 18, welches auf einer Kegelradwelle 26 angeordnet ist. Ein Verschwenken des Kniehebels 17 bewirkt damit eine Rotation der Kegelradwelle 26. Die Kegelradwelle 26 ist wiederum mit einem Absperrorgan 21 drehfest verbunden, wobei in Abhängigkeit von der Drehstellung des Absperrorgans 21 der Strömungskanal 9 durch die Absaugvorrichtung 1 freigegeben, gesperrt, oder verengt wird.

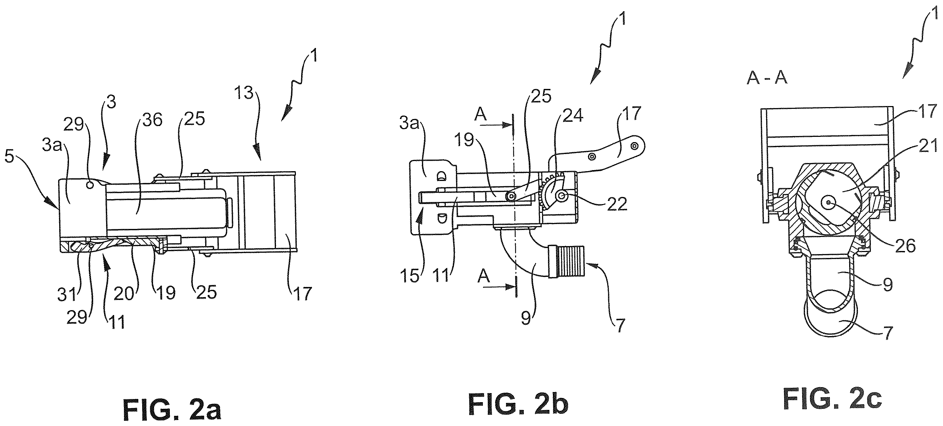

Die ebengenannten Betriebszustände sind in den Figuren 2 - 4 gezeigt.

Bei dem in den Figuren 2a - c gezeigten Zustand befindet sich die Absaugvorrichtung 1 in einer Ausgangsstellung, in welcher der Strömungskanal 9 mittels des Absperrorgans 21 verschlossen ist. Aus dem Mischfluideinlass 5 können mithin keine Fluidrückstände austreten. In dem betreffenden Zustand befindet sich der Kniehebel 17 in einer von dem Gehäuse 3 abgewandten Schwenkposition. Diese Position des Kniehebels 17 bewirkt, dass der Kopplungskörper 19, beweglich bleibt und jedenfalls nicht durch die Durchgangsöffnung 15 nach innen gezwungen wird. Die Absaugvorrichtung 1 kann in der gezeigten Betriebsposition etwa auf einen Anschluss eines Sammelbehälters (nicht dargestellt) aufgebracht werden. Die Position des Kniehebels 17, wie in den Figuren 2a - c dargestellt, bewirkt über die Kopplung der Kniehebelwelle mit dem Absperrorgan 21, dass dieses in eine Sperrposition rotiert ist. Ein Fluidfluss durch den Strömungskanal 9 ist damit unterbunden.

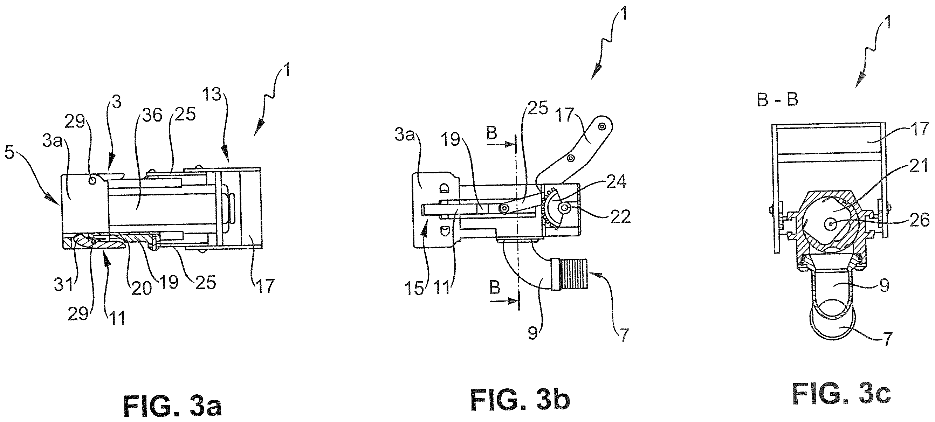

Bei dem in den Figuren 3a - c gezeigten Betriebszustand befindet sich die Absaugvorrichtung 1 einer Nachsaugstellung, als auch Schlürfstellung bezeichnet. In der Nachsaugstellung wir der Strömungskanal 9 durch das Absperrorgan 21 verengt, aber nicht vollständig abgesperrt. Durch die Verengung des Strömungskanals 9 wird eine Beschleunigung der Fluidströmung durch den Strömungskanal 9 hervorgerufen und Turbulenzen innerhalb der Strömung induziert. Restmengen des Mischfluids, insbesondere im Bereich des Mischfluid-Einlasses 5, werden durch die turbulente Strömung aufgewirbelt, das heißt insbesondere wird sichergestellt, dass Fluidreste nicht länger an dem Mischfluid-Einlass haften, und es lassen sich Fluidrestmengen sodann aus der Absaugvorrichtung 1 entfernen.

Die Stellung des Kniehebels 17 der in den Figuren 3a-c gezeigten Betriebsposition bedingt ferner, dass der Kopplungskörper 19 mit der Sperrklinke 11 in Kontakt tritt, und insbesondere der Keilabschnitt 20 des Kopplungskörpers 19 die Sperrklinke 11 im Kontaktbereich anhebt, wodurch sich der Verriegelungsabschnitt 31 der Sperrklinke 11 durch die Durchgangsöffnung 12 bewegt. Ist die Absaugvorrichtung 1, während sich die Absaugvorrichtung 1 in der Nachsaugstellung befindet, mit einem Auslass eines Sammelbehälters gekoppelt, so bleibt die Absaugvorrichtung 1 während des Durchlaufens der Nachsaugstellung mit dem Auslass gekoppelt. Erst nachdem der Kniehebel 17 in die in den Figuren 2a - c gezeigte Position verbracht worden ist, lässt sich die Absaugvorrichtung 1 von dem Sammelbehälter entfernen.

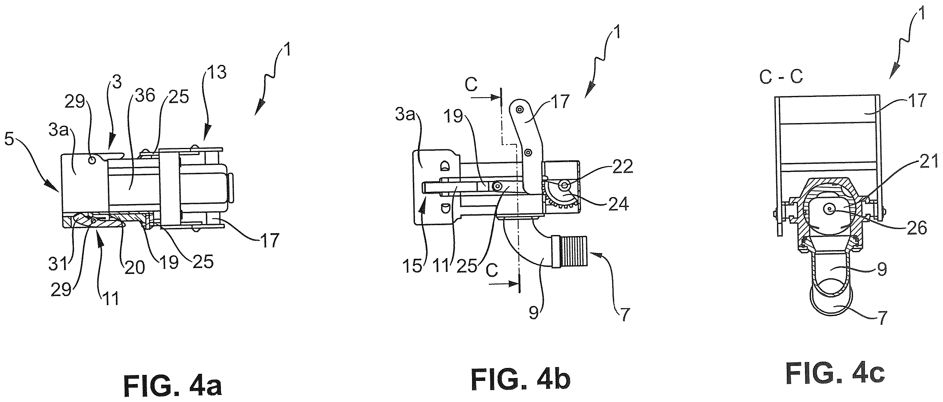

In den Figuren 4a - c befindet sich die Absaugvorrichtung 1 in einer Absaugstellung. Die Position des Kniehebels 17 bewirkt, dass der Kopplungskörper 19 mit dem Keilabschnitt 20 die Sperrklinke 11 im Kontaktbereich anhebt, wodurch der Verriegelungsabschnitt 31 der Sperrklinke 11 durch die Durchgangsöffnung 15 verschwenkt wird. Hierdurch ist die Absaugvorrichtung 1 fest und fluiddicht mit einem Auslass eines Sammelbehälters verbindbar. Die Stellung des Kniehebels 17 bewirkt ferner, dass das Absperrorgan 21 in bekannter Weise in eine geöffnete Stellung verbracht wird, so dass ein Fluidfluss durch den Strömungskanal 9 freigegeben ist.

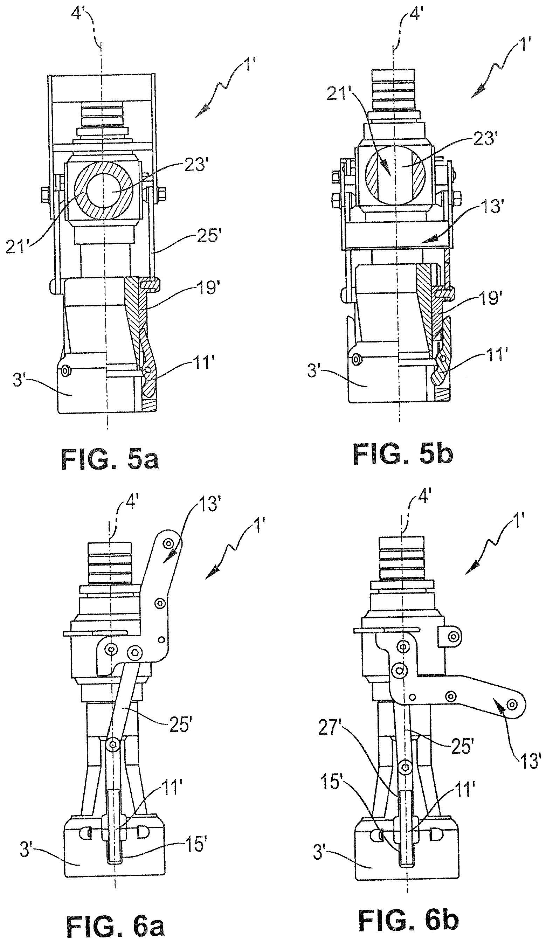

Die Figuren 5a und 5b zeigen eine erste Seitenansicht eines weiteren bevorzugten Ausführungsbeispiels der erfindungsgemäßen Absaugvorrichtung 1'in einer verriegelten und einer entriegelten Position.

Gemäß diesem Ausführungsbeispiel weist die Absaugvorrichtung 1' ein Gehäuse 3' mit einem Mischfluid-Einlass 5' und einem Mischfluid-Auslass 7' auf. Zwischen dem Ein- und Auslass erstreckt sich ein verschließbarer Strömungskanal 9'.

Die Absaugvorrichtung 1' umfasst ferner eine Sperrklinke 11', welche an dem Gehäuse 3' montiert und dazu eingerichtet ist, mit einer korrespondierenden Ausnehmung an dem Sammelbehälter zusammenzuwirken und zwischen einer verriegelten Position und einer entriegelten Position hin- und her schwenkbar ist.

Ferner ist an dem Gehäuse 3' ein Handhabungsmittel 13' montiert. Das Handhabungsmittel 13' und die Sperrklinke 11' sind derart wirkverbunden, dass bei der Bewegung der Sperrklinke 11' in die entriegelte Position das Absperrorgan 21' in die Sperrstellung gebracht wird. Umgekehrt wirken das Handhabungsmittel 13' und die Sperrklinke 11' derart zusammen, dass bei der Bewegung des Absperrorgans 21' in die Freigabeposition die Sperrklinke 11' in die verriegelte Position gebracht wird.

Das Handhabungsmittel 13' ist hier als Kniehebel ausgebildet, welcher mit einem entlang einer Längsachse bewegbaren Kopplungskörper 19', gemäß diesem Ausführungsbeispiel einem Keil, wirkverbunden ist. Der Kopplungskörper 19' ist dazu eingerichtet, die Sperrklinke 11' zwischen der verriegelten Position und der entriegelten Position hin und her zu bewegen.

Das Handhabungsmittel 13' ist dazu eingerichtet, ein Absperrorgan 21' mit einem Verengungskörper 23' zu betätigen. Der Verengungskörper 23' relativ zu dem Ein- und/oder -Auslass 7' in die Sperrstellung und in die Freigabestellung bewegbar ist, wobei der Verengungskörper 23' dazu eingerichtet ist, den Strömungskanal 9' in der Sperrstellung fluiddicht zu verschließen und in der Freigabestellung freizugeben.

Das Handhabungsmittel 13' und der Kopplungskörper 19' sind mittels eines Hebels 25' wirkverbunden. Bei einer Schwenkbewegung des Handhabungsmittels 13' zum Betätigen des Absperrorgans 21' wird die Schwenkbewegung durch den Hebel 25' in eine lineare Bewegung übersetzt. Der Kopplungskörper 19' bewegt sich folglich linear entlang der Längsachse 4. In dem Gehäuse 3' ist eine Ausnehmung 15' ausgebildet, durch welche ein einlassseitiger Teil der Sperrklinke 11' mittels einer Schwenkbewegung hindurch in die Sperrstellung bewegt werden kann.

Die Figuren 6a und 6b zeigen eine zweite Seitenansicht eines weiteren bevorzugten Ausführungsbeispiels der erfindungsgemäßen Absaugvorrichtung 1' in einer verriegelten und einer entriegelten Position.

Der Kopplungskörper 19' wird dabei mittels einer Nut 27', welche in dem Gehäuse 3' ausgebildet ist, in seiner Bewegung geführt.

Das Absperrorgan 21', welches durch den Kniehebel 13' betätigbar ist, ist dazu eingerichtet, in der Sperrposition den Strömungskanal 9' vollständig zu verschließen. In der Freigabestellung wird der Strömungskanal 9' durch das Absperrorgan 21 ` freigegeben.

Es ist ebenso im Sinne der Erfindung, dass das Absperrorgan 21' ferner in eine dritte Position, nämlich eine sogenannte Schlürfstellung bewegbar ist, in welcher der Strömungskanal nur verengt, aber nicht vollständig verschlossen wird.

## Patentansprüche

1. Absaugvorrichtung (1, 1') zum Abführen eines Mischfluids, insbesondere Fäkalien enthaltend, aus einem Sammelbehälter, insbesondere aus einem Fäkalientank eines Schienenfahrzeugs, mit
- einem Gehäuse (3, 3') mit einem Mischfluid-Einlass (5, 5') und einem Mischfluid-Auslass (7, 7'),
- einem Strömungskanal (9, 9'), der sich in dem Gehäuse (3, 3') zwischen dem Einlass (5, 5') und dem Auslass (7, 7') erstreckt,
- einer an dem Gehäuse (3, 3') montierten Sperrklinke (11, 11'), die dazu eingerichtet ist, mit einer korrespondierenden Ausnehmung an dem Sammelbehälter zusammenzuwirken und zwischen einer verriegelten Position und einer entriegelten Position hin und her schwenkbar ist,
- einem Absperrorgan (21, 21'), welches zwischen einer Freigabestellung und einer Sperrstellung hin- und her bewegbar ist, und
- einem an dem Gehäuse (3, 3') montierten Handhabungsmittel (13, 13') zum Betätigen des Absperrorgans (21, 21'),
wobei das Handhabungsmittel (13, 13') mit der Sperrklinke (11, 11') derart wirkverbunden ist, dass bei der Bewegung der Sperrklinke (11, 11') in die entriegelte Position das Absperrorgan (21, 21') in die Sperrstellung gebracht wird,
wobei das Absperrorgan (21, 21') drehbeweglich in dem Gehäuse angeordnet ist, und wobei die Freigabestellung und die Sperrstellung des Absperrorgans unterschiedlichen Drehstellungen des Absperrorgans entsprechen,
und wobei das Handhabungsmittel (13, 13`) mit dem Absperrorgan mittels eines Zahnradgetriebes wirkverbunden ist, wobei das Zahnradgetriebe dazu eingerichtet ist, die Betätigungsbewegung des Handhabungsmittels in die Drehbewegung des Absperrorgans umzusetzen.

2. Absaugvorrichtung (1, 1 ') nach Anspruch 1,
wobei das Handhabungsmittel (13, 13') derart mit der Sperrklinke (11, 11') wirkverbunden ist, dass bei der Bewegung des Absperrorgans (21, 21') in die Freigabeposition die Sperrklinke (11, 11') in die verriegelte Position gebracht wird.

3. Absaugvorrichtung (1, 1') nach Anspruch 1 oder 2,
wobei die Absaugvorrichtung (1) ferner einen entlang einer Längsachse (4, 4') bewegbaren Kopplungskörper (19, 19'), insbesondere einen Keil, umfasst, welcher mit dem Handhabungsmittel (13, 13') wirkverbunden und dazu eingerichtet ist, die Sperrklinke (11, 11') zwischen der verriegelten Position und der entriegelten Position hin- und herzubewegen.

4. Absaugvorrichtung (1, 1 ') nach einem der vorstehenden Ansprüche,
wobei die Sperrklinke (11, 11') schwenkbar im Bereich des Mischfluid-Einlasses (5, 5') montiert und dazu eingerichtet ist, mit einem Anschluss des Sammelbehälters in Eingriff gebracht zu werden.

5. Absaugvorrichtung (1, 1') nach Anspruch 3,
wobei das Handhabungsmittel (13, 13') einen Schieber aufweist, und der Kopplungskörper (19, 19') an dem Schieber ausgebildet ist.

6. Absaugvorrichtung (1, 1') nach Anspruch 3,
wobei das Handhabungsmittel (13') einen Kniehebel aufweist, und der Kopplungskörper (19') mittels eines drehbar gelagerten Hebels (25') mit dem Kniehebel gekoppelt ist.

7. Absaugvorrichtung (1, 1') nach einem der Ansprüche 3, 5 oder 6,
wobei an dem Gehäuse (3, 3') eine Nut (27`) ausgebildet ist, welche dazu eingerichtet ist, den Kopplungskörper (19, 19') zu führen.

8. Absaugvorrichtung (1) nach einem der vorstehenden Ansprüche,
wobei das Absperrorgan zusätzlich zu der Sperrstellung und der Freigabestellung in eine Schlürfstellung bewegbar ist, so dass das Absperrorgan dazu eingerichtet ist, den Strömungskanal (9) in der Sperrstellung fluiddicht zu verschließen, in der Freigabestellung freizugeben, und in der Schlürfstellung lediglich verengt freizugeben, derart, dass in der Schlürfstellung der Querschnitt des Strömungskanals (9) geringer ist, als in der Freigabestellung.

9. Absaugvorrichtung (1) nach Anspruch 8,
wobei das Absperrorgan (21) drehbeweglich in dem Gehäuse angeordnet ist, und wobei die Freigabestellung und die Sperrstellung des Absperrorgans unterschiedlichen Drehstellungen des Absperrorgans entsprechen, und wobei die Schlürfstellung einer weiteren Drehstellung des Absperrorgans entspricht.

10. Absaugvorrichtung (1) nach Anspruch 9,
wobei die Schlürfstellung zwischen der Freigabestellung und der Sperrstellung angeordnet ist.

## Claims

1. An extraction device (1, 1') for discharging a mixed fluid, in particular containing feces, from a collecting tank, in particular from a feces tank of a rail vehicle, comprising
- a housing (3, 3') having a mixed fluid inlet (5, 5') and a mixed fluid outlet (7, 7'),
- a flow passage (9, 9') which extends in the housing (3, 3') between the inlet (5, 5') and the outlet (7, 7'),
- a retaining latch (11, 11') which is mounted to the housing (3, 3') and which is adapted to cooperate with a corresponding recess on the collecting tank and is pivotably reciprocal between a locked position and an unlocked position,
- a shut-off member (21, 21') which is reciprocable between a release position and a blocking position, and
- a handling means (13, 13') mounted to the housing (3, 3') for actuation of the shut-off member (21, 21'),
wherein the handling means (13, 13') is operatively connected to the retaining latch (11, 11') in such a way that upon the movement of the retaining latch (11, 11') into the unlocked position the shut-off member (21, 21') is put into the blocking position,
wherein the shut-off member (21, 21') is arranged rotationally moveably in the housing and wherein the release position and the blocking position of the shut-off member correspond to different rotary positions of the shut-off member,
and wherein the handling means (13, 13') is operatively connected to the shut-off member by means of a gear transmission, wherein the gear transmission is adapted to convert the actuating movement of the handling means into the rotary movement of the shut-off member.

2. An extraction device (1, 1') as set forth in claim 1,
wherein the handling means (13, 13') is operatively connected to the retaining latch (11, 11') in such a way that in the movement of the shut-off member (21, 21') into the release position the retaining latch (11, 11') is put into the locked position.

3. An extraction device (1, 1') as set forth in claim 1 or claim 2,
wherein the extraction device (1) further includes a coupling body (19, 19'), in particular a wedge, which is moveable along a longitudinal axis (4, 4') and which is operatively connected to the handling means (13, 13') and is adapted to reciprocate the retaining latch (11, 11') between the locked position and the unlocked position.

4. An extraction device (1, 1') as set forth in one of the preceding claims,
wherein the retaining latch (11, 11') is mounted pivotably in the region of the mixed fluid inlet (5, 5') and is adapted to be brought into engagement with a connection of the collecting tank.

5. An extraction device (1, 1') as set forth in claim 3,
wherein the handling means (13, 13') has a slider and the coupling body (19, 19') is provided on the slider.

6. An extraction device (1, 1') as set forth in claim 3,
wherein the handling means (13') has a toggle lever and the coupling body (19') is coupled to the toggle lever by means of a rotatably mounted lever (25').

7. An extraction device (1, 1') as set forth in one of claims 3, 5 or 6,
wherein provided on the housing (3, 3') is a groove (27') adapted to guide the coupling body (19, 19').

8. An extraction device (1) as set forth in one of the preceding claims,
wherein in addition to the locking position and the release position the shut-off member is moveable into a slurp position so that the shut-off member is adapted to fluid-tightly close the flow passage (9) in the blocking position, to open it in the release position and in the slurp position to only constrictively open it in such a way that in the slurp position the cross-section of the flow passage (9) is smaller than in the release position.

9. An extraction device (1) as set forth in claim 8,
wherein the shut-off member (21) is arranged rotatably in the housing and wherein the release position and the blocking position of the shut-off member correspond to different rotary positions of the shut-off member and wherein the slurp position corresponds to a further rotary position of the shut-off member.

10. An extraction device (1) as set forth in claim 9,
wherein the slurp position is arranged between the release position and the blocking position.

## Revendications

1. Dispositif d'évacuation par aspiration (1, 1') destiné à évacuer un fluide mélangé, contenant en particulier des matières fécales, hors d'un récipient de collecte, en particulier d'un réservoir à matières fécales d'un véhicule sur rails, avec
- un boîtier (3, 3') avec une entrée pour fluide mélangé (5, 5') et une sortie pour fluide mélangé (7, 7'),
- un canal d'écoulement (9, 9'), qui s'étend entre l'entrée (5, 5') et la sortie (7, 7') dans le boîtier (3, 3'),
- un cliquet de blocage (11, 11') monté sur le boîtier (3, 3'), qui est mis au point pour coopérer avec un évidement correspondant sur le récipient de collecte et qui peut être pivoté en va-et-vient entre une position verrouillée et une position déverrouillée,
- un organe d'arrêt (21, 21'), lequel peut être déplacé en va-et-vient entre une position de déblocage et une position de blocage, et
- un moyen de manipulation (13, 13') monté sur le boîtier (3, 3') destiné à actionner l'organe d'arrêt (21, 21'),
dans lequel le moyen de manipulation (13, 13') est en liaison fonctionnelle avec le cliquet de blocage (11, 11') de telle manière que, lors du déplacement du cliquet de blocage (11,11') dans la position déverrouillée, l'organe d'arrêt (21, 21') est amené dans la position de blocage,
dans lequel l'organe d'arrêt (21, 21') est disposé de manière mobile en rotation dans le boîtier, et dans lequel la position de déblocage et la position de blocage de l'organe d'arrêt correspondent à différentes positions de rotation de l'organe d'arrêt,
et dans lequel le moyen de manipulation (13, 13') est en liaison fonctionnelle avec l'organe d'arrêt au moyen d'une transmission par engrenages, dans lequel la transmission par engrenages est mise au point pour convertir le déplacement d'actionnement du moyen de manipulation en le déplacement de rotation de l'organe d'arrêt.

2. Dispositif d'évacuation par aspiration (1, 1') selon la revendication 1,
dans lequel le moyen de manipulation (13, 13') est en liaison fonctionnelle avec le cliquet de blocage (11, 11') de telle manière que, lors du déplacement de l'organe d'arrêt (21, 21') dans la position de déblocage, le cliquet de blocage (11, 11') est amené dans la position verrouillée.

3. Dispositif d'évacuation par aspiration (1, 1') selon la revendication 1 ou 2,
dans lequel le dispositif d'évacuation par aspiration (1) comprend en outre un corps de couplage (19, 19') pouvant être déplacé le long d'un axe longitudinal (4, 4'), en particulier une cale, lequel est en liaison fonctionnelle avec le moyen de manipulation (13, 13') et est mis au point pour déplacer en va-et-vient le cliquet de blocage (11, 11') entre la position verrouillée et la position déverrouillée.

4. Dispositif d'évacuation par aspiration (1, 1') selon l'une quelconque des revendications précédentes,
dans lequel le cliquet de blocage (11, 11') est monté de manière à pouvoir pivoter dans la zone de l'entrée pour fluide mélangé (5, 5') et est mis au point pour être amené en prise avec un raccord du récipient de collecte.

5. Dispositif d'évacuation par aspiration (1, 1') selon la revendication 3,
dans lequel le moyen de manipulation (13, 13') présente un coulisseau, et le corps de couplage (19, 19') est réalisé sur le coulisseau.

6. Dispositif d'évacuation par aspiration (1, 1') selon la revendication 3,
dans lequel le moyen de manipulation (13') présente un levier coudé, et le corps de couplage (19') est couplé au levier coudé au moyen d'un levier (25') monté de manière à pouvoir tourner.

7. Dispositif d'évacuation par aspiration (1, 1') selon l'une quelconque des revendications 3, 5 ou 6,
dans lequel est réalisée sur le boîtier (3, 3') une rainure (27'), laquelle est mise au point pour guider le corps de couplage (19, 19').

8. Dispositif d'évacuation par aspiration (1) selon l'une quelconque des revendications précédentes,
dans lequel l'organe d'arrêt peut être déplacé, en plus de la position de blocage et de la position de déblocage, dans une position d'aspiration de telle sorte que l'organe d'arrêt est mis au point pour fermer de manière étanche aux fluides le canal d'écoulement (9) dans la position de blocage, pour le débloquer dans la position de déblocage, et pour le débloquer de manière seulement resserrée dans la position d'aspiration, de telle manière que, dans la position d'aspiration, la section transversale du canal d'écoulement (9) est inférieure à celle dans la position de déblocage.

9. Dispositif d'évacuation par aspiration (1) selon la revendication 8,
dans lequel l'organe d'arrêt (21) est disposé de manière mobile en rotation dans le boîtier, et dans lequel la position de déblocage et la position de blocage de l'organe d'arrêt correspondent à différentes positions de rotation de l'organe d'arrêt, et dans lequel la position d'aspiration correspond à une autre position de rotation de l'organe d'arrêt.

10. Dispositif d'évacuation par aspiration (1) selon la revendication 9,
dans lequel la position d'aspiration est disposée entre la position de déblocage et la position de blocage.
